# FASCICULE DE BREVET EUROPEEN

(11) **EP 2 559 490 B1**
(45) Date de publication et mention de la délivrance du brevet: **06.12.2017**
(21) Numéro de dépôt: 12192400.5
(22) Date de dépôt: 28.06.2007
(51) Int. Cl.: B01L 7/02, B01L 9/00, B02C 17/14, B01L 9/06

(54) **Dispositif pour la prise simultanée d'une pluralité de tubes pour échantillons biologiques**
Vorrichtung zum gleichzeitigen Aufgreifen einer Mehrzahl von Probengefäßen für biologische Proben
Device for simultaneously picking up a plurality of tubes for biological sample

(30) Priorité: 30.06.2006 FR 0605944
(43) Date de publication de la demande: 20.02.2013
(62) Demande divisionnaire de: 07803803.1
(73) Titulaire: Bertin Technologies, 78180 Montigny-le-Bretonneux (FR)
(72) Inventeur: KUNC, Thierry, 78000 VERSAILLES (FR); BOUGY, Jean-Jacques, 78890 GARANCIERES (FR); BOQUET, Jean, 78610 LE PERRAY EN YVELINES (FR); VALLAYER, Julien, 78950 GAMBAIS (FR); SOREL, Emmanuelle, 28260 ROUVRES (FR)
(74) Mandataire: Ramey, Daniel

(56) Documents cités:
- WO-A2-2004/012851
- FR-A1- 2 872 233
- JP-A- 2003 128 242
- US-A- 5 372 786

## Description

L'invention concerne un accessoire pour la prise simultanée d'une pluralité de tubes tel que défini à la revendication 1 et censé être utilisé avec un appareil de broyage d'échantillons biologiques, comprenant un plateau de support de tubes contenant des échantillons et des moyens d'entraînement du plateau en mouvement oscillant autour d'un centre de rotation situé sur l'axe du plateau.

Un tel appareil de broyage est décrit en particulier dans les documents WO-A-2004/012851 et FR-A-2 872 233 et comprend des paliers concentriques montés l'un à l'intérieur de l'autre pour le support et le centrage du plateau porte-tubes, ces paliers étant disposés entre une partie suspendue élastiquement de l'appareil et un arbre d'entraînement portant le plateau. Le plateau est immobilisé en rotation autour de l'arbre d'entraînement de sorte que les tubes contenant les échantillons sont soumis à un mouvement alternatif curviligne à fréquence élevée et que les échantillons qu'ils contiennent sont broyés et homogénéisés par des microbilles, par exemple de verre ou de céramique, contenues avec les échantillons dans les tubes. Ce type de broyage est très efficace et très rapide mais a pour inconvénient une augmentation assez importante de la température des échantillons dans les tubes. Même lorsque les tubes contenant les échantillons sont refroidis préalablement au broyage, la température des échantillons en fin de broyage peut atteindre ou dépasser des valeurs de l'ordre de 60 à 70° C, auxquelles certaines caractéristiques des échantillons sont modifiées de façon irréversible. C'est le cas par exemple des protéines dont l'activité est déterminée à la fois par leur séquence et par leur structure tridimensionnelle, cette structure étant détruite par chauffage. Un dispositif de prise simultanée d'une pluralité de tubes contenant des échantillons est connu de US-A-5,372,786. La présente invention propose un accessoire du type pince multiple automatique pour la prise simultanée d'une pluralité de tubes disposés sur un support et contenant des échantillons biologiques, et pour le transport de cette pluralité de tubes et le dépôt des tubes simultanément dans des logements prévus sur un plateau d'un appareil pour le broyage d'échantillons biologiques, caractérisé en ce que la prise des tubes est réalisée automatiquement par encliquetage élastique et leur dépôt est réalisé par une seule manoeuvre d'un organe de commande prévu sur ledit accessoire.

L'accessoire comprend un capot annulaire destiné à coiffer les extrémités supérieures des tubes à saisir et équipé d'une pluralité de moyens d'encliquetage élastique destinés à s'engager et à se bloquer sur les extrémités des tubes, et un organe de commande formé par un bouton poussoir ou un bouton quart de tour par exemple, monté sur le capot et destiné à agir sur tous les moyens d'encliquetage pour la libération des extrémités des tubes.

La présente invention concerne également appareil pour le broyage d'échantillons biologiques, comprenant un plateau de support de tubes contenant les échantillons et des moyens d'entraînement du plateau en mouvement oscillatoire autour d'un centre de rotation situé sur l'axe du plateau, caractérisé en ce que des moyens de refroidissement des tubes sont portés par une partie de l'appareil et entourent le plateau précité pour délimiter une zone refroidie comprenant la zone d'oscillation des tubes portés par le plateau, et en ce qu'il comprend un accessoire tel que décrit ci-dessus.

Les moyens de refroidissement, qui peuvent être fixes ou amovibles, permettent de maintenir les échantillons à une température de quelques degrés au-dessus de zéro en fin de broyage, de sorte que la structure tridimensionnelle des protéines contenues dans ces échantillons n'est pas altérée.

Dans un mode de réalisation, les moyens de refroidissement comprennent une paroi annulaire, sensiblement en forme de bol, qui délimite ladite zone refroidie et comporte des moyens d'appui ou de fixation sur une partie fixe de l'appareil. En variante, les moyens de refroidissement comprennent une paroi annulaire, sensiblement en forme de cloche, qui délimite ladite zone refroidie et comporte des moyens de fixation ou de positionnement sur une partie mobile de l'appareil

Cette paroi annulaire peut être à une température nettement inférieure à celle des tubes et par exemple inférieure à 0°C lorsqu'elle est mise en place sur l'appareil, de façon à absorber la chaleur rayonnée par les tubes portés par le plateau, cette absorption étant suffisante pour maintenir les échantillons contenus dans les tubes à une température de l'ordre de 4°C par exemple, en fin de broyage.

En variante, cette paroi annulaire peut être équipée de moyens d'alimentation ou de circulation d'un fluide froid.

En particulier, cette paroi peut être équipée de conduits de circulation d'un gaz cryogénique tel que l'azote et de buses d'éjection permettant le refroidissement local des tubes par des jets de gaz froid.

Selon une autre variante, cette paroi annulaire peut être équipée de moyens thermoélectriques de refroidissement générant du froid par effet Peltier.

Avantageusement, les moyens de refroidissement comprennent des moyens d'aspiration du gaz réchauffé qui est présent dans la zone refroidie incluant la zone d'oscillation des tubes portés par le plateau.

L'aspiration continue ou discontinue du gaz présent dans cette zone améliore le maintien des tubes à une température basse souhaitée.

L'appareil selon l'invention comprend un accessoire, du type pince multiple automatique, pour la prise simultanée d'une pluralité de tubes disposés sur un support commun, le transport de cette pluralité de tubes et le dépôt des tubes simultanément dans les logements prévus sur le plateau de l'appareil, la prise des tubes étant réalisée automatiquement par encliquetage et le dépôt des tubes étant réalisé par une seule manoeuvre d'un organe de commande prévu sur l'accessoire.

Il est important en effet que les tubes qui sont refroidis avant broyage puissent être mis en place sur le plateau de l'appareil en un temps aussi court que possible pour éviter leur réchauffement partiel avant broyage.

L'accessoire selon l'invention permet de saisir simultanément tous les tubes (par exemple au nombre de 24) qui doivent être mis en place sur le plateau et de les déposer simultanément dans leurs logements du plateau. Selon l'invention cet accessoire comprend un capot circulaire destiné à coiffer les extrémités supérieures des tubes à saisir et équipé d'une pluralité de moyens d'encliquetage destinés à s'engager et à se bloquer sur les extrémités des tubes, et un organe de commande formé par un bouton poussoir ou par un bouton quart de tour, par exemple, qui est monté sur le capot et est destiné à agir simultanément sur tous les moyens d'encliquetage pour les ouvrir et permettre la libération des extrémités des tubes.

Cet accessoire facilite grandement l'utilisation de l'appareil selon l'invention.

L'invention sera mieux comprise et d'autres détails, caractéristiques et avantages de celle-ci apparaîtront plus clairement à la lecture de la description qui suit, faite à titre d'exemple en référence aux dessins annexés, dans lesquels :
- la figure 1 est une vue schématique en coupe axiale d'un appareil de broyage selon l'invention ;
- la figure 2 est une vue schématique à plus grande échelle d'une partie de l'appareil de la figure 1 ;
- la figure 3 illustre une variante de réalisation de l'invention ;
- les figures 4 et 5 sont des vues schématiques en coupe et en perspective de l'accessoire de prise de tubes ;
- la figure 6 est une vue schématique en perspective d'un support de tubes ;
- Les figures 7a, 7b et 7c sont des vues schématiques illustrant le fonctionnement de l'accessoire de prise de tubes.

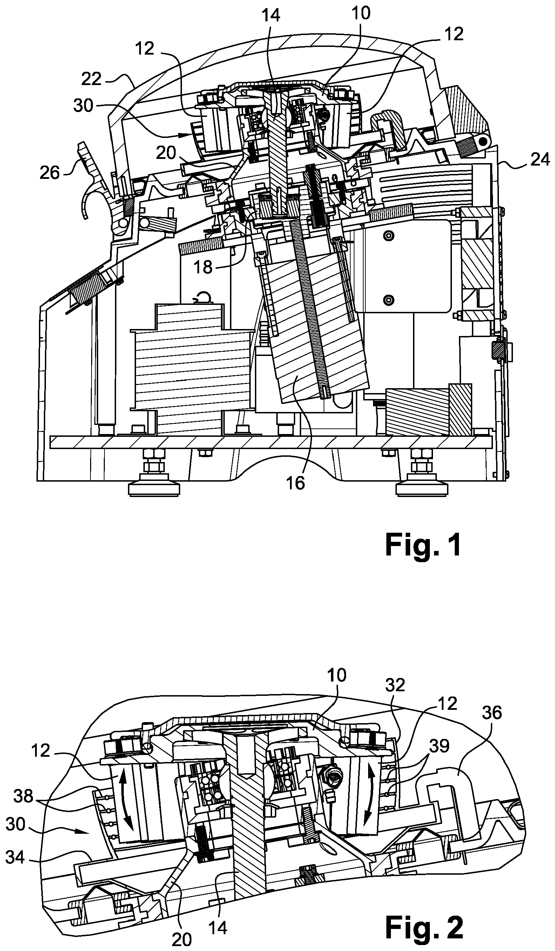

L'appareil de broyage selon l'invention, qui est représenté schématiquement aux figures 1 et 2, est du type décrit dans le document FR-A-2 872 233 et comprend essentiellement un plateau 10 portant des tubes à échantillon 12 à sa périphérie et monté en bout d'un arbre 14 entraîné en mouvement oscillant autour d'un centre de rotation situé sur l'axe de l'arbre, par un moteur électrique 16 au moyen d'un excentrique 18.

L'arbre 14 est supporté et centré sur une partie 20 élastiquement suspendue de l'appareil au moyen d'un système de paliers concentriques montés les uns à l'intérieur des autres, comprenant un palier à rotule et à billes porté par l'arbre 14 et tournant à l'intérieur de deux roulements à billes axialement superposés comme décrit dans le document FR-A-2 872 233.

L'appareil comprend encore, comme représenté en figure 1, un capot pivotant 22 porté par une carrosserie fixe 24 et venant recouvrir le plateau 10 en vue du broyage des échantillons contenus dans les tubes. Des moyens de verrouillage 26 permettent de maintenir le capot 22 dans la position représentée en figure 1 pendant le broyage des échantillons.

Pendant ce broyage, le plateau 10 est immobilisé en rotation autour de l'axe de l'arbre 14 et les tubes 12 sont entraînés en mouvement alternatif curviligne comme indiqué par les flèches en figure 2.

Pour éviter que les échantillons contenus dans les tubes 12 soient portés pendant leur broyage à une température élevée par des microbilles de verre, de céramique ou toute autre matière appropriée contenues dans les tubes, l'invention prévoit de disposer des moyens de refroidissement 30 autour de la zone d'oscillation des tubes 12, ces moyens 30 comprenant une paroi annulaire 32 en forme de bol, portée par un socle 34 permettant de la positionner et de la fixer sur la partie 20 suspendue élastiquement de l'appareil.

Le socle 34 constitue également une chambre communiquant avec l'espace délimité par la paroi 32 et qui est équipée de moyens d'aspiration d'air, comprenant notamment un conduit d'aspiration 36 qui débouche à l'intérieur du socle 34 par une extrémité et dont l'extrémité opposée est destinée à être reliée à des moyens d'aspiration.

Dans un premier mode de réalisation, les moyens de refroidissement 30 sont réalisés en un matériau présentant de préférence une inertie thermique relativement élevée, et peuvent être portés à une température basse, par exemple de l'ordre de -60 à -100°C par des moyens appropriés, pour être ensuite mis en place dans l'appareil de broyage sur la partie 20 de cet appareil comme représenté en figure 2, juste avant de démarrer le broyage d'une série d'échantillons.

La paroi 32 rayonne alors du froid dans toute la zone d'oscillation des tubes 12 portés par le plateau 10, ce qui permet de maintenir la température des échantillons à des valeurs d'environ 4°C par exemple jusqu'à la fin du broyage.

L'air contenu à l'intérieur de la paroi 32, se réchauffe progressivement pendant le broyage des échantillons et est aspiré à l'extérieur au moyen du conduit 36, pour favoriser le refroidissement des échantillons.

Il est avantageux dans cette forme de réalisation que les moyens de refroidissement 30 puissent être mis en place sur l'appareil et retirés de cet appareil de façon simple et rapide. Ils peuvent être à cet effet équipés de moyens de fixation sur l'appareil qui sont du type à vissage rapide, à baïonnette, à encliquetage, etc.

Dans un autre mode de réalisation de l'invention, la paroi 32 des moyens de refroidissement est équipée de conduits ou de canaux 38 de circulation d'un fluide froid, permettant de maintenir la température de la paroi 32 à une valeur basse souhaitée, par exemple comprise entre -60 et -100°C. Le fluide froid peut être un gaz cryogénique, tel que l'azote, et les canaux 38 peuvent être équipés de buses 39 d'éjection de gaz froid sur les tubes.

Dans ce cas, les moyens de refroidissement 30 peuvent être fixés à demeure sur la partie suspendue 20 de l'appareil et être alimentés en fluide froid uniquement pour les opérations de broyage d'échantillons.

Dans une autre mode de réalisation, la paroi 32 des moyens de refroidissement peut être équipée d'éléments thermoélectriques générant du froid par effet Peltier.

Dans ce cas, les moyens de refroidissement 30 peuvent également être montés à demeure sur la partie 20 de l'appareil, et leurs éléments thermoélectriques sont alimentés en énergie électrique à l'occasion des opérations de broyage d'échantillons.

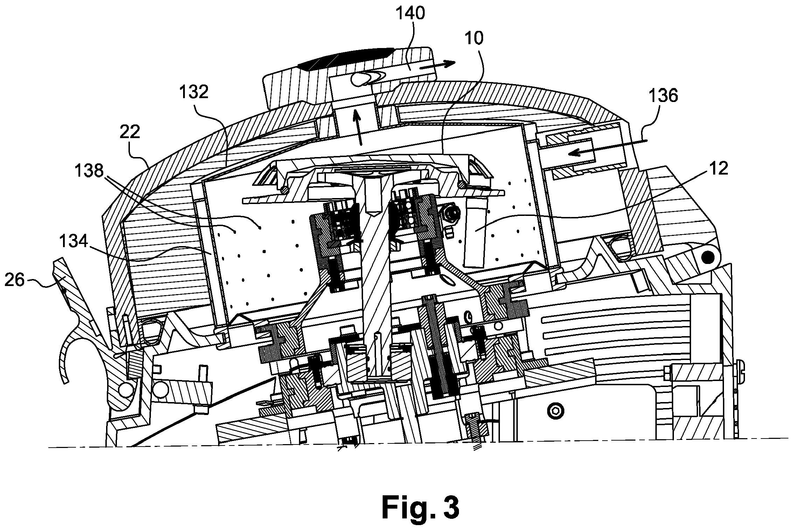

Dans la variante de réalisation de la figure 3, les moyens de refroidissement des tubes comprennent une cloche 132 fixée à l'intérieur du capot 22 de l'appareil, sensiblement au centre de ce capot, de façon à venir coiffer le plateau 10 et les tubes 12 quand le capot est rabattu en position de service et bloqué par les moyens de verrouillage 26.

Dans cette position, le bord inférieur de la cloche 132 est appliqué sur la partie 20 élastiquement suspendue de l'appareil.

La cloche 132 est à double paroi cylindrique. L'intervalle annulaire 134 défini par cette double paroi est raccordé à des moyens 136 d'amenée ou de circulation d'air froid, prévus sur une partie arrière du capot 22. La paroi interne de la cloche 132 comporte une pluralité de perforations 138 de sortie d'air froid, permettant de maintenir les tubes 12 à une température souhaitée pendant le broyage des échantillons.

L'air dans la cloche 132, qui s'est échauffé au contact des tubes 12, est évacué à l'extérieur du capot par un canal 140 formé dans la partie supérieure centrale du capot et de la cloche.

Par exemple, l'air froid amené par les moyens 136 est à une température de - 50° C et la température à l'intérieur de la cloche en fonctionnement est d'environ - 20° C.

Lorsque le plateau 10 de l'appareil est destiné à recevoir un certain nombre de tubes à échantillons 12, par exemple au nombre de 24 dans un mode de réalisation particulier de l'appareil, il est avantageux que les tubes 12 puissent être mis en place très rapidement sur le plateau 10.

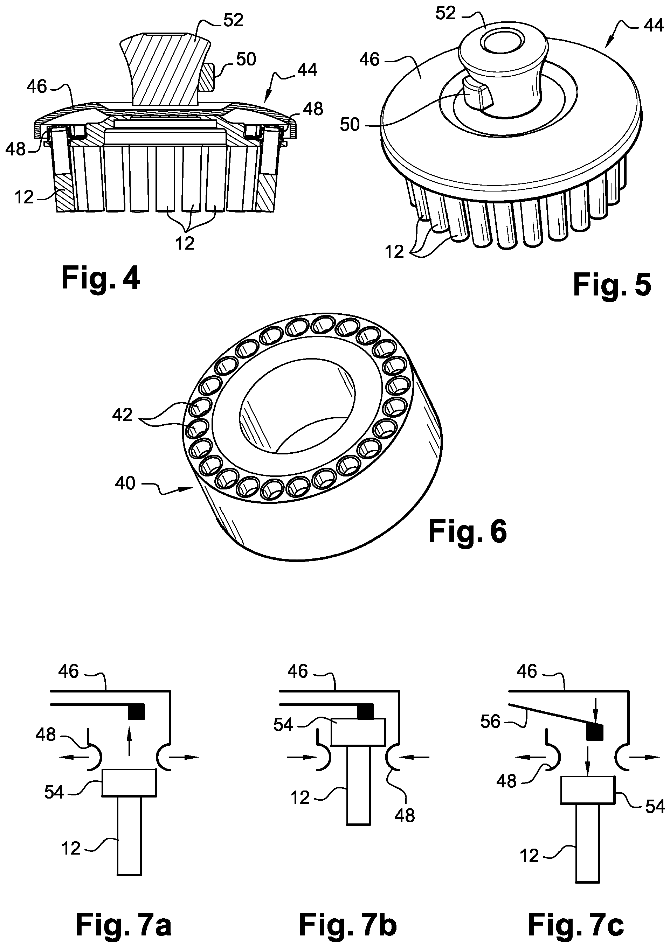

Pour cela, l'invention propose un accessoire représenté aux figures 4 et 5, destiné à saisir des tubes à échantillons qui sont disposés sur un support représenté en figure 6.

Ce support 40 est par exemple de forme cylindrique et comporte autant de logements 42 de tubes à échantillons que le plateau 10 de l'appareil de broyage.

Les logements 42 du support 40 sont disposés de la même façon que les logements des tubes 12 sur l'appareil 10 et sont répartis sur un cercle de même diamètre que le cercle formé par les logements des tubes sur le plateau 10.

Ces logements 42 ont une profondeur inférieure à la longueur des tubes 12, de façon à ce que les extrémités supérieures des tubes puissent dépasser assez largement des logements 42 pour être saisies facilement au moyen de l'accessoire 44 représenté aux figures 4 et 5.

Cet accessoire comprend essentiellement un capot annulaire 46 qui est équipé d'un certain nombre de moyens 48 de préhension des extrémités supérieures des tubes par encliquetage élastique.

Ces moyens de préhension 48 sont reliés à un organe commun de manoeuvre 50, tel qu'un bouton poussoir par exemple, qui est porté par une poignée centrale 52 du capot 46.

Le fonctionnement de l'accessoire 44 est illustré schématiquement par les figures 7a, 7b et 7c.

La figure 7a représente la prise d'un tube 12 par les moyens 48.

Il suffit pour cela de placer l'accessoire 44 au-dessus des tubes 12 placés dans les logements 42 du support 40, puis de descendre l'accessoire 44 sur ces tubes pour engager les moyens de prise 48 sur les bouchons 54 des tubes.

En poussant encore vers le bas, on engage les moyens d'encliquetage élastique 48 sous les bouchons 54 des tubes, comme représenté en figure 7b.

Il suffit alors de soulever l'accessoire 44 pour sortir tous les tubes 12 du support 40 et les positionner ensuite dans l'alignement de leurs logements du plateau 10 de l'appareil de broyage.

Lorsque les tubes 12 sont engagés dans ces logements, on appuie sur le bouton poussoir 50 de la poignée 52 pour libérer tous les tubes 12 par écartement des moyens 48 d'encliquetage élastique.

Pour cela, comme représenté en figure 7c, le bouton poussoir 50 peut être associé à des moyens 56 poussant sur les bouchons 54 des tubes pour les expulser vers le bas en écartant élastiquement au passage les moyens 48 d'encliquetage élastique.

On peut utiliser d'autres moyens en variante, par exemple une poignée rotative quart de tour ou tout autre moyen approprié.

Le support 40 et l'accessoire 44 permettent de stocker les tubes à échantillons 12 dans un endroit froid, par exemple à une température de 0°C ou très légèrement supérieure, puis de placer ensuite tous les tubes 12 dans leurs logements du plateau 10 en quelques secondes, sans leur laisser le temps d'être réchauffés par l'atmosphère ambiante.

L'accessoire 44 évite ainsi qu'un opérateur soit obligé de manipuler les tubes 12 un par un à la main pour les mettre en place sur le plateau 10 de l'appareil.

## Revendications

1. Accessoire (44) du type pince multiple automatique pour la prise simultanée d'une pluralité de tubes (12) disposés sur un support (40) et contenant des échantillons biologiques, et pour le transport de cette pluralité de tubes et le dépôt des tubes simultanément dans des logements prévus sur un plateau (10) d'un appareil pour le broyage d'échantillons biologiques, **caractérisé en ce qu'**il comprend un capot annulaire (46) destiné à coiffer les extrémités supérieures des tubes à saisir et équipé d'une pluralité de moyens (48) d'encliquetage élastique destinés à s'engager et à se bloquer sur les extrémités des tubes, et un organe de commande (50) monté sur le capot (46) et destiné à agir sur tous les moyens (48) d'encliquetage pour la libération des extrémités des tubes (12)..

2. Accessoire selon la revendication 1, **caractérisé en ce que** l'organe de commande est formé par un bouton poussoir ou un bouton quart de tour.

3. Appareil pour le broyage d'échantillons biologiques, comprenant un plateau (10) de support de tubes (12) contenant les échantillons et des moyens (16, 18) d'entraînement du plateau en mouvement oscillatoire autour d'un centre de rotation situé sur l'axe du plateau,
**caractérisé en ce que** des moyens (30, 132) de refroidissement des tubes sont portés par une partie (20, 22) de l'appareil et entourent le plateau précité pour délimiter une zone refroidie comprenant la zone d'oscillation des tubes (12) portés par le plateau,
et **en ce qu'**il comprend un accessoire selon la revendication 1 ou 2.

## Patentansprüche

1. Zubehörteil (44), das als automatische Mehrfachzange zum gleichzeitigen Ergreifen einer Mehrzahl von Röhrchen (12) ausgeführt ist, die an einem Träger (40) angeordnet sind und biologische Proben beinhalten, sowie zum Transport dieser Mehrzahl von Röhrchen und Absetzen der Röhrchen gleichzeitig in Aufnahmeausnehmungen, die an einer Platte (10) eines Geräts zum Zermahlen biologischer Proben vorgesehen sind,
**dadurch gekennzeichnet, dass** es eine ringförmige Haube (46) enthält, die dazu bestimmt ist, die oberen Enden der zu ergreifenden Röhrchen zu übergreifen, und die mit einer Mehrzahl von elastischen Einrastmitteln (48) ausgestattet ist, die dazu bestimmt sind, an den Enden der Röhrchen einzugreifen und sich daran zu sichern, sowie ein Steuerglied (50), das an der Haube (46) angebracht und dazu bestimmt ist, zur Freigabe der Enden der Röhrchen (12) auf alle Einrastmittel (48) einzuwirken.

2. Zubehörteil nach Anspruch 1, **dadurch gekennzeichnet, dass** das Steuerglied aus einem Drucktastenschalter bzw. Vierteldrehungsschalter gebildet ist.

3. Gerät zum Zermahlen von biologischen Proben, enthaltend eine Platte (10) zum Tragen von Proben beinhaltenden Röhrchen (12) und Mitnahmemittel (16, 18) zum Mitnehmen der Platte in Schwingbewegung um einen Rotationsmittelpunkt, der auf der Achse der Platte liegt,
**dadurch gekennzeichnet, dass** Kühleinrichtungen (30, 132) zum Abkühlen der Röhrchen von einem Abschnitt (20, 22) des Geräts getragen werden und die vorgenannte Plate umgeben, um einen abgekühlten Bereich zu begrenzen, der den Schwingbereich der von der Platte getragenen Röhrchen (12) enthält,
und dass es ein Zubehörteil nach Anspruch 1 oder 2 enthält.

## Claims

1. An accessory (44) of the automatic multiple clamp type for simultaneously picking up a plurality of tubes (12) placed on a support (40) and containing biological samples, and in order to transport said plurality of tubes and place the tubes simultaneously in housings provided in a turntable (10) of an apparatus for grinding biological samples, the accessory being **characterized in that** it comprises the accessory comprises an annular cover (46) for covering the top ends of the tubes for grasping, and fitted with a plurality of elastic snap-fastener means (48) designed to engage and clamp onto the ends of the tubes, and a control member (50) mounted on the cover (46) and designed to act on all of the snap-fastener means (48) in order to release the ends of the tubes (12).

2. An accessory according to claim 1, **characterized in that** the control member is formed by a pushbutton or by a quarter-turn button.

3. Apparatus for grinding biological samples, the apparatus comprising a turntable (10) for supporting tubes (12) containing the samples and means (16, 18) for imparting oscillating motion to the turntable about a center of rotation situated on the axis of the turntable, the apparatus being **characterized in that** tube cooling means (30, 132) are carried by a portion (20, 22) of the apparatus and surround the above-mentioned turntable to define a cooled zone containing the zone in which the tubes (12) carried by the turntable oscillate, and **in that** it comprises an accessory according to claim 1 or 2.
